# EUROPÄISCHE PATENTSCHRIFT

(11) **EP 1 295 160 B1**
(45) Veröffentlichungstag und Bekanntmachung des Hinweises auf die Patenterteilung: **17.08.2005**
(21) Anmeldenummer: 01969319.1
(22) Anmeldetag: 26.06.2001
(51) Int. Cl.: G02B 23/12

(54) **NACHTSICHTGERÄT**
NIGHT-VISION DEVICE
DISPOSITIF DE VIGILANCE NOCTURNE

(30) Priorität: 26.06.2000 WO PCT/EP00/05924
(43) Veröffentlichungstag der Anmeldung: 26.03.2003
(73) Patentinhaber: Vectronix AG, 9435 Heerbrugg (CH)
(72) Erfinder: ZADRAVEC, Dusan, CH-9445 Rebstein (CH)
(74) Vertreter: Kaminski, Susanne, Dr.
(86) Internationale Anmeldenummer: PCT/EP2001/007276
(87) Internationale Veröffentlichungsnummer: WO 2002/001273

(56) Entgegenhaltungen:
- EP-A- 0 252 200
- EP-A- 0 381 449
- WO-A-01/01185
- US-A- 4 124 798
- US-A- 4 828 378
- US-A- 5 416 315
- US-A- 5 579 165

## Beschreibung

Die Erfindung bezieht sich auf ein, insbesondere monokulares, Nachtsichtgerät nach dem Oberbegriff des Anspruches 1, sowie auf eine Vorrichtung zum Ein- bzw. Auskoppeln von optischen Signalen - insbesondere zur Verwendung mit einem solchen Nachtsichtgerät - nach Anspruch 9.

Nachtsichtgeräte sind im wesentlichen nach folgenden Prinzipien ausgebildet. Ein, vorzugsweise lichtstarkes, Objektiv fokussiert die von einem zu beobachtenden Objekt ausgehenden Strahlen auf ein Eintrittsfenster eines Restlichtverstärkers. Das Bild des Objektes wird dort elektronisch verstärkt und erscheint, infolge des phosphoreszierenden Belages am Ausgang des Restlichtverstärkers, als helles grünes Bild auf dessen Austrittsfenster. Über ein dem Restlichtverstärker zugeordnetes - gegebenenfalls separates optisches - Bildumkehrsystem wird das verstärkte, grüne Bild des Objektes umgekehrt. Dieses grüne Bild wird über ein Okular ins Auge des Anwenders projiziert.

Das Ergebnis ist ein lang bauendes, schweres und relativ teures Nachtsichtgerät, mit einer ungünstigen Lage des Schwerpunktes bei nicht-handgehaltenen Anwendungen.

Aus der WO 96/10764 ist ein monokulares Nachtsichtgerät bekannt, bei welchem zwei reflektive, optische Elemente mit je einer Spiegelfläche zwischen dem Restlichtverstärker und dem Okular angeordnet sind. Diese zueinander verschobenen Spiegelflächen sind gegeneinander ausgerichtet. Auch dieses Nachtsichtgerät weist die bautechnischen Nachteile konventioneller Nachtsichtgeräte auf.

Ferner ist aus der US 4,000,419 eine Einkoppelvorrichtung zum Einkoppeln optischer Signale in den Strahlengang zwischen dem augenseitigen Abschlusselement eines Nachtsichtgerätes und dem Auge des Anwenders bekannt. Eine solchen Vorrichtung kann - abhängig von jeweiligen Situationen - an ein dafür vorgesehenes Nachtsichtgerät angebracht werden. Durch das Anbringen der Einkoppelvorrichtung wird zwangsläufig der Pupillenabstand reduziert, was vor allem für Brillenträger den Tragekomfort erheblich reduziert und gegebenenfalls optische Nacheinstellungen erfordert.

Aus der EP-A-381 449 ist ein konventionelles Nachtsichtgerät zu entnehmen, das mit einem Zusatz zur Einspiegelung von Daten versehen ist. Mittels eines im Okular vorgesehenen Bildkombinators wird dem Betrachterauge die zusätzliche Information mit gleichem Fokus wie das verstärkte Bild zur Verfügung gestellt.

Die US 5,416,315 zeigt ein Paar von Nachtsichtoptiken, die in einen Helm integriert sind, und die aufgrund ihres optischen Systems, das den Strahlengang mittels zweier reflektiver Oberflächen faltet, sehr kompakt gehalten sind und eine ungehinderte periphere Sicht erlauben.

Der Erfindung liegt demgegenüber die Aufgabe zugrunde, ein Nachtsichtgerät bereitzustellen, das einen Restlichtverstärker, gegebenenfalls mit einem herkömmlichen Inverter, aufweist, jedoch eine deutliche Reduktion in Bezug auf Länge, Gewicht und Herstellkosten des Gerätes ergibt. Auch sollte der Abstand des Geräteschwerpunkts zum Kopf des Anwenders, insbesondere bei nicht-handgehaltenen Anwendungen, reduziert werden. Zudem liegt die Aufgabe zugrunde, abhängig von jeweiligen Situationen, mit zusätzlichen Vorrichtungen visuelle Informationen dem Nachtsichtbild hinzuzufügen oder zu entnehmen.

Dies gelingt erfindungsgemäss durch die Verwirklichung der kennzeichnenden Merkmale des Anspruchs 1. Wenn dabei davon die Rede ist, dass die optische Achse des Objektivs des Gerätes "im wesentlichen" parallel zu der zum Rezeptor führenden Achse sein soll, so können sich geringe Abweichungen von der Parallelität gegebenenfalls durch einen Parallaxenausgleich ergeben. Wenn gesagt wird, der Strahlengang zwischen dem Restlichtverstärker und dem Rezeptor sei durch reflektive, optische Elemente bestimmt, so schliesst dies keinesfalls aus, dass auch Linsensysteme mit brechenden Elementen mitverwendet werden. Damit soll festgestellt sein, dass unter "Bestimmung des Strahlengangs zwischen Restlichtverstärker und Rezeptor" die Faltung der optischen Achse des Strahlenbündels zu verstehen ist.

Vorteilhafte bzw. alternative Ausführungsformen werden durch die Merkmale der abhängigen Ansprüche beschrieben.

Bei der Erfindung wird der Strahlengang grundsätzlich durch reflektive, optische Elemente zwischen dem Restlichtverstärker und einem Rezeptor, wie beispielsweise dem menschlichen Auge, und zwischen dem Restlichtverstärker und dem Objekt gefaltet. Daraus resultiert eine für den Tragekomfort eines erfindungsgemässen Gerätes vorteilhafte, nicht unbeträchtliche Gewichts- und Baulängenreduktion sowie eine Reduktion der Herstellkosten. Zusätzlich kann die erfindungsgemässe Lösung mit vier reflektiven, optischen Elementen noch die Eigenschaft aufweisen, das Objekt direkt beobachten zu können (z.B. wie durch eine Sonnenbrille) und gleichzeitig auch sein verstärktes, im allgemeinen grünes, Bild - überlagert auf das "direkte" Bild - zu sehen. Die dem Rezeptor zugeordnete Spiegelfläche des ersten, reflektiven Elementes schränkt bei einer entsprechenden Grösse das Gesichtsfeld für das nicht-restlichtverstärkte Sehen nicht ein.

Wird die dem Rezeptor zugeordnete Spiegelfläche ohne die Eigenschaft auch das "direkte" Bild zu sehen ausgebildet, so kann in einer Ausbildung des erfindungsgemässen Gerätes das Okular auf zwei Teile aufgeteilt werden. Ein erster Okularteil wird auf der Rezeptorstrahlenachse zwischen dem dem Rezeptor zugeordneten Spiegel und dem Rezeptor und ein zweiter Okularteil zwischen dem dem Rezeptor zugeordneten Spiegel und dem Restlichtverstärker angeordnet. Damit wird es möglich, ein Gerät mit geringerer Baugrösse zu realisieren und damit im Anwendungsfall die Lage des Schwerpunktes des Gerätes zusätzlich zu optimieren.

Der Einsatz von reflektiven Elementen kann eine vollständige Bildumkehr ermöglichen. Dadurch kann auf einen speziellen Inverter verzichtet werden. Ausserdem ist damit - bei nicht direkt aufeinanderfolgender Anordnung der Spiegel - die Integration einzelner Spiegelflächen in andere Bauelemente des Gerätes (z.B. in den Okularspiegel) ermöglicht, und gibt grössere Gestaltungsmöglichkeiten bei der Faltung des Strahlengangs.

Durch die Faltung des Strahlengangs ist ein gegebener Strahlengang besser an die geometrischen Gegebenheiten anzupassen, es können kompakte und anwendungsgerechte Aussenabmessungen realisiert werden. So kann eine optimale Lage des Geräteschwerpunktes, speziell für helmbasierte Anwendungen erreicht werden. Auch für handgehaltene Anwendungen sind ergonomisch vorteilhafte Bauformen erzielbar.

Dies wird durch eine variabel wählbare Faltung des Strahlengangs noch weiter verbessert, wobei die optische Achse des Objektivs und die Rezeptorstrahlenachse gegenüber den anderen, dazwischen liegenden Baugruppen verdrehbar sind. Im allgemeinen wird darauf zu achten sein, dass diese Verdrehung immer zueinander parallel zu erfolgen hat.

Sollten jedoch auch Schwenkbewegungen einer dieser Achsen erforderlich werden, so hätte die andere Achse eine gegenläufige Schwenkbewegung - in zueinander parallelen Ebenen - auszuführen.

Damit wird es möglich, ein bestimmtes Gerät an die individuellen Gegebenheiten des Benutzers anzupassen, auch wird ein Zugewinn an Flexibilität bei einer möglichen Systemintegration des Gerätes - z.B. als Nachzieleinrichtung bei Tagsicht-Zielgeräten, bei Tagsicht-Distanzmessern, bei Kompassen usw. - erreicht.

Selbst im wesentlichen spiegelsymmetrische Abänderungen des Gerätes sind denkbar, die Zurverfügungstellung von linken und rechten Versionen des Gerätes werden überflüssig.

Es versteht sich, dass zwei monokulare Geräte zu einem binokularen Nachtsichtgerät kombiniert werden könnten. Es können gegebenenfalls vor Ort zwei gleiche Geräte zu einer handgehaltenen oder helmbasierten Nachtsichtbrille kombiniert werden. Der gefaltete Strahlengang ermöglicht in einem solchen Fall einen grösseren Objektivabstand für stereoskopisches Restlichtsehen.

Eine erfindungsgemässe Einkoppel- bzw. Auskoppelvorrichtung ermöglicht - beispielsweise im Gefechtseinsatz - einen visuellen, lautlosen Informationsaustausch, auch während der Restlichtbeobachtung (situational awareness). Diese ist erfindungsgemäss so ausgebildet, dass der Abstand zwischen ) dem Rezeptor und dem Gerät durch die Einkoppel- bzw. Auskoppelvorrichtung nicht beeinträchtigt wird und die im Feld oder gegebenenfalls sogar während des Betriebs des Gerätes ein- bzw. ausgesteckt werden kann. In dem Teil des Strahlengangs in den die Einkoppel- bzw. Auskoppelvorrichtung eingeschoben wird, sind die optischen Strahlen vorzugsweise kollimiert. Dadurch wird ermöglicht, dass ein in den Strahlengang eingeschobenes Ein- bzw. Auskoppelmodul keinen Einfluss auf den Verlauf des Strahlengangs bis hin zum Rezeptor hat, d.h. ein gleichbleibender Sehkomfort auch für Brillenträger gegeben ist.

Unterschiedlichste Anwendungen für einzukoppelnde Informationen - am besten farblich vom Restlichtbild differenziert - sind gegeben: Orientierungsinformation (z.B. Kompass, GPS, Distanzinformation), Zielinformation (Position eines möglichen Zieles, auf das Restlichtbild überlagert), alphanumerische Handlungsanweisungen, bei der Integration in ein Zielsystem kann mit einem Bildschirm ein elektronisch justierbares Fadenkreuz realisiert werden. Einblendung von Bildszenen von anderen Standorten und -punkten, usw.

Unterschiedlichste Anwendungen für auszukoppelnde Informationen sind beispielsweise: Dokumentation der vorgefundenen Situation und der ausgeführten eigenen Aktionen (z.B. Polizeischarfschützen, usw.) Übermittlung von Bildszenen vom eigenen Standort an Entscheider und Gefechtspartner.

Eine modulartige Gestaltung der Einkoppel- bzw. Auskoppelvorrichtung zeichnet sich einerseits durch Anwenderfreundlichkeit und andererseits durch eine grosse Flexibilität aus. So werden durch die Bereitstellung einer einfachen, zuverlässigen Hardwareschnittstelle - in Form einer Vorrichtungsaufnahme - die Interdependenzen zwischen der Einkoppel- bzw. Auskoppelvorrichtung und dem diese aufnehmenden Gerät minimiert werden. Der Benutzer kann derartige Einkoppel- bzw. Auskoppelvorrichtungen bei sich tragen und je nach Anwendungszweck in ein Nachtsichtgerät oder gegebenenfalls in ein anderes, mit einer entsprechenden Vorrichtungsaufnahme versehenes, optisches Gerät einstecken. Technische Fortschritte bei den Einkoppel- bzw. Auskoppelvorrichtungen haben keinen negativen Einfluss auf den technischen Stand eines mit einer entsprechenden Vorrichtungsaufnahme versehenen, optischen Gerätes, solange die mechanische und optische Ausgestaltung der Einkoppel- bzw. Auskoppelvorrichtung gleichbelassen wird.

Nachstehend soll die Erfindung anhand der in den Figuren der Zeichnung dargestellten Ausführungsvarianten rein beispielhaft näher erörtert werden. Gleiche Teile in unterschiedlichen Ausführungsbeispielen, welche dieselben Funktionen ausüben, sind nachstehend mit denselben Bezeichnungen und Bezugszeichen versehen. Es zeigen:
- Figur 1a: eine Darstellung optischer Elemente eines erfindungsgemässen Nachtsichtgerätes mit einer Vorrichtungsaufnahme für Ein- bzw. Auskoppelvorrichtung für einen visuellen Informationsaustausch in einer Schrägansicht;
- Figur 1b: eine Darstellung der optischen Elemente einer drehbaren Ausführungsform eines erfindungsgemässen Nachtsichtgerätes in der Draufsicht;
- Figur 1c: eine Darstellung optischer Elemente einer weiteren Ausführungsform eines erfindungsgemässen Nachtsichtgerätes mit einer Vorrichtungsaufnahme für Ein- bzw. Auskoppelvorrichtung sowie einem zweiteiligen Okular in einer Schrägansicht;
- Figur 2a: eine im Schnitt dargestellte Ausführungsform einer erfindungsgemässen Vorrichtungsaufnahme in Seitenansicht;
- Figur 2b: eine im Schnitt dargestellte Ausführungsform einer erfindungsgemässen Einkoppelvorrichtung für den Informationsaustausch in Seitenansicht und
- Figur 2c: eine im Schnitt dargestellte Ausführungsform einer erfindungsgemässen Auskoppelvorrichtung für den Informationsaustausch in Seitenansicht.

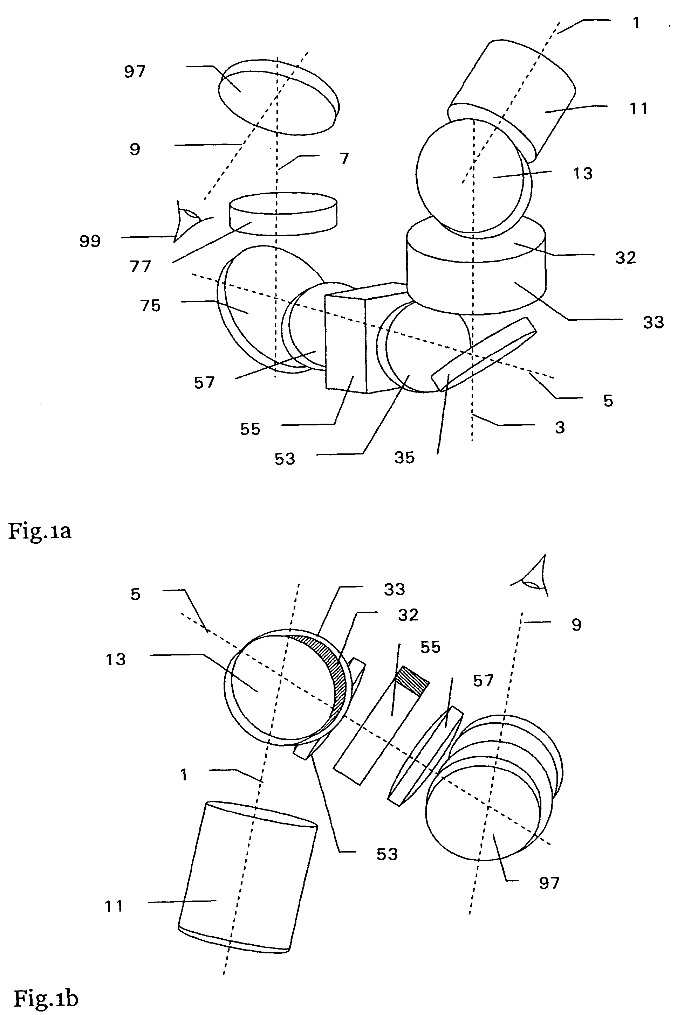

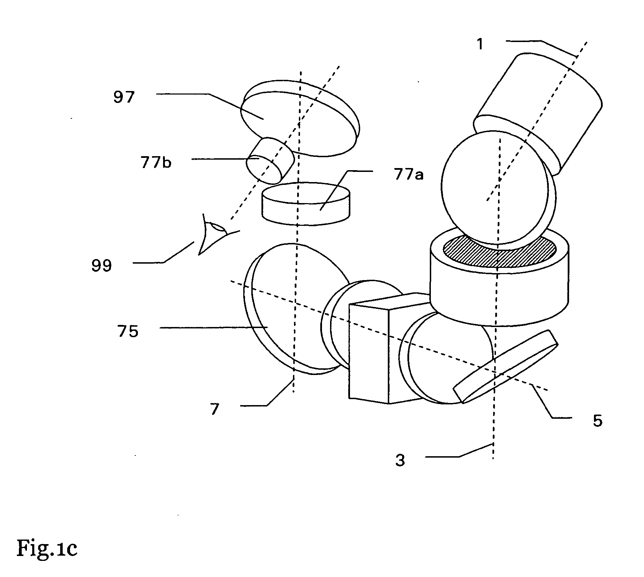

Figur 1a zeigt die wesentlichen optischen Bauelemente einer Ausführungsform eines erfindungsgemässen, monokularen Nachtsichtgerätes sowie deren Anordnung zueinander. Diese Ausführungsform weist neben einem Restlichtverstärker 33, einem eine Objektachse 1 aufweisenden Objektiv 11, einem eine Okularachse 7 aufweisenden Okular 77, Linsensystemen und vier unter bestimmten Winkeln paarweise zueinander angeordnete, reflektive, optische Elemente mit je einer Spiegelfläche auf. Die reflektiven, optischen Elemente die im allgemeinen plan vorzusehen sind, können aber auch fallweise leicht asphärisch auszubilden sein. Anstelle von Planspiegeln könnten auch Reflexionsprismen als reflektive Elemente vorzusehen sein. In Figur 1a sind die jeweiligen Spiegelflächen beispielsweise wie bei einem konventionellen Porro-2-Prismensystem ausgerichtet. Im Gegensatz zu einem herkömmlichen, solchem Prismensystem zur vollkommenen Bildumkehr sind jedoch hier die Spiegelflächen nicht in einer in sich geschlossenen Baugruppe angeordnet, sondern sind vielmehr verschiedenen, optischen Bauelementen des erfindungsgemässen Nachtsichtgerätes einzeln oder als komplanares - d.h. eine gemeinsame Einfallsebene für optische Strahlen aufweisendes - Paar zugeordnet.

Die vom Objekt ausgehenden Strahlen werden vom Objektiv 11 über das in Form des Objektivspiegels 13 ausgebildete, erste reflektive Element auf das Eintrittsfenster 32 des Restlichtverstärkers 33 fokussiert. Der Objektivspiegel 13 ist dabei so ausgerichtet, dass die Objektivachse 1 mit der optischen Achse des Restlichtverstärkers 33, der Verstärkerachse 3, einen rechten Winkel bildet. Das vom Restlichtverstärker 33 verstärkte Strahlenbündel wird von dem in Form des Verstärkerspiegels 35 ausgebildeten, zweiten reflektiven Element erneut gespiegelt. Dabei ist der Verstärkerspiegel 35 so ausgerichtet, dass die Mittelachse des gespiegelten Strahlenbündels parallel zur einer Verbindungsachse 5 ist. In dieser Ausführungsform steht die Verbindungsachse 5 beispielsweise senkrecht auf die Ebene, welche durch die Objektivachse 1 und die Verstärkerachse 3 aufgespannt wird. Die vom Verstärkerspiegel 35 gespiegelten Lichtstrahlen werden durch ein Kollimatorlinsensystem 53 in ein vorzugsweise kollimiertes, zur Verbindungsachse 5 paralleles Strahlenbündel transformiert. Dieses vorzugsweise kollimierte Strahlenbündel durchquert gegebenenfalls eine an dieser Stelle vorgesehene Vorrichtungsaufnahme 55. Danach kann das Strahlenbündel durch ein Fokussierlinsensystem 57 fokussiert werden, bevor es über ein zum Verstärkerspiegel 35 in Form des Verbindungsspiegels 75 ausgebildetes, drittes reflektives Element wieder parallel zur Verstärkerachse 3 abgelenkt wird. Die Mittelachse des am Verbindungsspiegel 75 gespiegelten Strahlenbündels fällt mit der optischen Achse eines Okularlinsensystems 77, der Okularachse 7, zusammen. Der Verstärkerspiegel 35 und der Verbindungsspiegel 75 weisen eine gemeinsame Einfallsebene auf, die hier durch die Verstärkerachse 3, die Verbindungsachse 5 und die Okularachse 7 aufgespannt wird. Das Okularlinsensystem 77 projiziert das am Verbindungsspiegel 75 gespiegelte Strahlenbündel indirekt über das in Form des Rezeptorspiegels 97 ausgebildete, vierte reflektive Element in das Auge 99. Dabei ist der Rezeptorspiegel 97 so ausgerichtet, dass die Rezeptorstrahlenachse 9 des am Rezeptorspiegel 97 gespiegelten Strahlenbündels parallel zur Objektivachse 1 verläuft. Da zudem der Rezeptorspiegel 97 wellenlängenabhängig durchlässig ausgebildet sein kann, kann das verstärkte Nachtsichtbild über das reale Bild gelegt werden (See-Through- System). Nur bei Objekten, welche sich in der unmittelbaren Nähe befinden, ist ein geringer horizontaler und vertikaler Parallaxenversatz zu beobachten.

Figur 1b zeigt eine Ausführungsform eines monokularen Nachtsichtgerätes, das dieselben optischen Bauelemente des Nachtsichtgerätes aus Figur 1a aufweist. Im Gegensatz zu der Ausführungsform in der Figur 1a sind jedoch die Spiegelflächen nicht wie bei einem Porro-2-Prismensystem ausgerichtet. Auch sind in dieser Ausführungsform optische Elemente um Achsen drehbar miteinander verbunden. So ist einerseits der Objektivspiegel 13 und, damit verbunden, das Objektiv 11 drehbar um die Verstärkerachse 3 gelagert. Andererseits ist der Rezeptorspiegel 97 seinerseits um die Okularachse 7 drehbar gelagert. Der Verstärkerspiegel 35, Kollimatorlinsensystem 53, die Vorrichtungsaufnahme 55, das Fokussierlinsensystem 57 und der Verbindungsspiegel 75 sind hier über ein in nicht dargestelltes Verbindungsstück starr miteinander verbunden. In jedem Fall ist sicherzustellen, dass auch nach einem etwaigen Verdrehen des Rezeptor- (97) und des Objektivspiegels (13) die Parallelität der Rezeptorstrahlenachse 9 mit der Objektivachse 1 erhalten bleibt. Dies können beispielsweise über die Drehbereiche identisch angeordnete Einrastungen, sogenannte "Click-Stops", ermöglichen. Diese Paralleldrehung kann aber auch durch eine entsprechende mechanische Vorrichtung erzwungen werden. Das achsparallele Verdrehen des Rezeptorspiegels 97 und des Objektivs 11 hat gleich mehrere Vorteile. Durch ein Verdrehen des Rezeptorspiegels 97 und des Objektivs 11 um jeweils 180° könnte das monokulare Nachtsichtgerät aus Figur 1b, welches hier für eine rechtsäugige Beobachtung eingestellt ist, prinzipiell für einen linksäugigen Einsatz adaptiert werden. Durch achsparallele Verdrehungen der Rezeptorstrahlenachse 9 und der Objektivachse 1 kann im allgemeinen aber auch, wie in Figur 1b dargestellt, der Verlauf des Strahlengangs und damit die Lage des Schwerpunktes des Gerätes unter Berücksichtigung der individuellen Gegebenheiten der Benutzer für eine im allgemeinen übliche Fixierung am Helm optimiert werden. Hierfür ist die Distanz zwischen Schwerpunkt des Gerätes und der Drehachse des Helms auf dem Benutzerkopf möglichst gering zu halten.

Figur 1c zeigt eine weitere Ausführungsform eines erfindungsgemässen Nachtsichtgerätes mit einem voll verspiegelten Rezeptorspiegel 97. Im Gegensatz zu den Ausführungsformen der Figuren 1a und 1b kann hier nur das restlichtverstärkte Bild und nicht auch noch das "direkte" Bild gesehen werden. Dafür ist das Okular 77 erfindungsgemäss auf zwei Okularteile aufgeteilt. Ein erster Okularteil 77a bleibt zwischen dem Rezeptorspiegel 79 und dem Verbindungsspiegel 75 angeordnet. Ein zweiter Okularteil 77b ist auf der Rezeptorstrahlenachse 9 zwischen dem Rezeptorspiegel 97 und dem Rezeptor 99 angeordnet. Dadurch ist es möglich, das Gerät mit einer geringeren Baugrösse zu realisieren und damit im Anwendungsfall die Lage des Schwerpunktes des Geräts zusätzlich zu optimieren. Wird diese Ausführungsform entsprechend der Ausbildungsvariante von Figur 1b als verdrehbares Nachtsichtgerät ausgebildet, so ist sicherzustellen, dass das zweite Okularteil 77b mit dem Rezeptorspiegel 97 starr verbunden ist.

Wie aus den Figuren 1a, 1b und 1c zu ersehen ist, basiert die dargestellte Verteilung der Bauelemente auf handhabungstechnischen Überlegungen, d.h. Kompaktheit, Handlichkeit, günstiger Schwerpunkt, usw.. Es versteht sich aber, dass - bei gleicher optischer Funktionsweise des Geräts- die einzelnen Bauelemente zwischen den reflektiven Elementen auch anders angeordnet sein könnten. So könnte beispielsweise der Restlichtverstärker 33 auch zwischen dem Verstärkerspiegel 35 und dem Verbindungsspiegel 75, oder sogar zwischen dem Verbindungsspiegel 75 und dem Rezeptorspiegel 97 angeordnet sein.

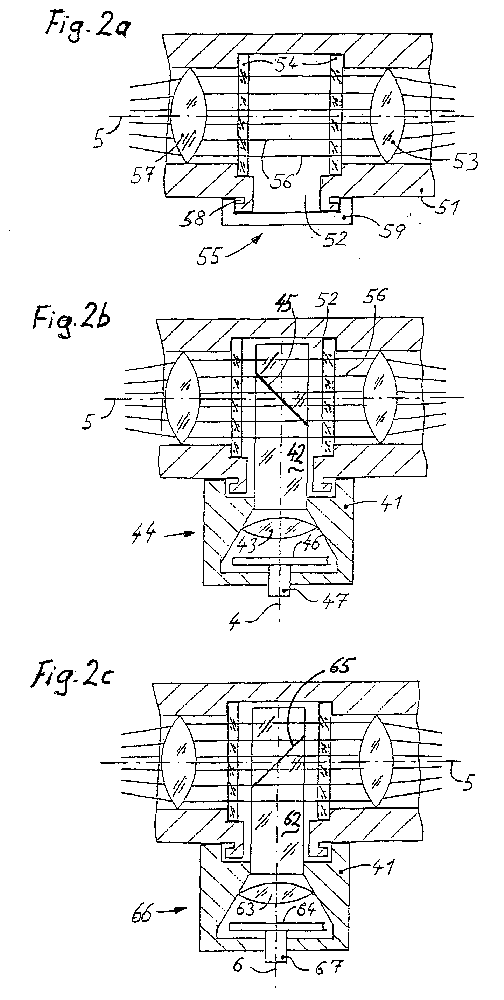

Figur 2a zeigt eine mögliche Ausführungsform einer Vorrichtungsaufnahme 55 für beispielsweise ein Nachtsichtgerät entsprechend den Figuren 1a, 1b und 1c, die im Verbindungsstück zwischen dem Verstärkerspiegel 35 und dem Verbindungsspiegel 75 angeordnet ist. Die im Verbindungsgehäuse 51 dafür vorgesehene Aussparung 52 umfasst beispielsweise den gesamten Strahlenquerschnitt des vorzugsweise kollimierten Strahlenbündels 56. Ein- bzw. Auskoppelvorrichtungen für das Ein- bzw. Auskoppeln von visuellen Informationen lassen sich selbstverständlich auch realisieren, wenn nur ein Teil des Strahlengangs zur Nutzung zur Verfügung steht. In dieser Ausführungsform tritt das durch das Kollimatorlinsensystem 53 parallel zur Verbindungsachse 5 ausgerichtete, vorzugsweise kollimierte Strahlenbündel 56 durch ein erstes planparalleles Dichtfenster 54 in die Aussparung 52 der Vorrichtungsaufnahme 55. Nach der Durchquerung der Aussparung 52 tritt das vorzugsweise kollimierte Strahlenbündel 56 durch ein zweites planparalleles Dichtfenster 54 und trifft dann auf das Fokussierlinsensystem 57. Diese erfindungsgemässe Anordnung gewährleistet einerseits eine gasdichte Abtrennung der Vorrichtungsaufnahme 55 vom dem mit Schutzgas gefüllten Innenraum des Nachtsichtgerätes und ermöglicht andererseits durch das vorzugsweise kollimierte Strahlenbündel 56 den Einschub eines teilweise transparenten Ein- bzw. Auskoppelelementträgers, beispielsweise eines planparallelen Glaskörpers, in die Aussparung 52, ohne dass dadurch der Strahlengang des Nachtsichtgerätes beeinflusst wird. Natürlich wäre ein Ein- bzw. Auskoppeln auch an anderen Stellen des Gerätes und sogar in den nichtkollimierten Teilen des Strahlengangs möglich, jedoch ist die in Figur 2a beschriebene Ausführung vorteilhaft bezüglich Einfachheit der Konstruktion und Flexibilität zwischen verschiedenen Gerätetypen mit identischem Vorrichtungsaufnahmekonzept. Die am Verbindungsgehäuse 51 angeordnete Nut 58 erlaubt im Zusammenspiel mit einem Verriegelungsmechanismus (in Figur 2a nicht dargestellt) die Befestigung eines Schutzdeckels 59, welcher Verunreinigungen und mechanischen Beschädigungen der Vorrichtungsaufnahme 55 vorbeugen soll.

Figur 2b zeigt eine in Form des Einkoppelmoduls 44 ausgebildete Ausführungsform einer erfindungsgemässen Ein- bzw. Auskoppelvorrichtung. Das Einkoppelmodul 44 ist in die Vorrichtungsaufnahme 55 eingeschoben und verriegelt dargestellt. Dabei greift das Modulgehäuse 41 über die Nut 58 und die Verriegelungselemente (in Figur 2b nicht dargestellt) kommen zum Eingriff. Ein lichtleitender Einkoppelelementträger 42, beispielsweise ein Glasquader, der neben zwei planparallelen Flächen, welche senkrecht auf die Verbindungsachse 5 stehen, auch noch das Einkoppelelement 45, einen beispielsweise physikalischen Strahlteiler, aufweist, ist in Figur 2b so in die Aussparung 52 geschoben, dass er vom gesamten Strahlenbündel 56 durchquert wird. Die Teilerfläche des Einkoppelelementes 45 kann aber auch sehr klein sein. Die Teilerschicht ist vorteilhaft so zusammengesetzt, dass sie bei den vom Restlichtverstärker emittierten Wellenlängen ein Transmissionsmaximum aufweist. Das Einkoppelelement 45 ist im Einkoppelelementträger 42 so ausgerichtet, dass die Einkoppelachse 4 der Projektionsoptik 43 parallel zur Verbindungsachse 5 in Richtung des Fokussierlinsensystems 57 in den Strahlengang eingekoppelt wird. Die Abstrahlfläche kann ein Display 46, z.B. ein aktiv beleuchteter LCD-Bildschirm, ein LED-Display oder eine andere lichtemittierende Fläche, sein. Die auf dem LCD-Bildschirm 46 dargestellten Informationen werden über die Einkoppeldatenschnittstelle 47 bereitgestellt. Neben alphanumerischen Zeichen oder graphischen Symbolen können auch bewegte Bilder, welche beispielsweise von einem Wärmebildgerät stammen, geeignet skaliert zur Verfügung gestellt werden. Eine "Sensor-Fusion" verschiedenster Sensoren wird durch solche Anordnung möglich.

In Figur 2c zeigt eine in Form des Auskoppelmoduls 44 ausgebildete Ausführungsform einer erfindungsgemässen Ein- bzw. Auskoppelvorrichtung. Das Auskoppelmodul 66 ist analog im gleichen Modulgehäuse 41 ausgeführt. Der Auskoppelelementträger 62 mit den gleichen Aussenabmessungen wie der Einkoppelelementträger 42 aus Figur 2b weist insbesondere im Gegensatz dazu ein Auskoppelelement 65 auf, der 10 bis 20% der vom Restlichtverstärker emittierten Strahlen reflektiert. Das Auskoppelelement 65 ist so ausgerichtet, dass es eine Auskoppelachse 6 einer Abbildungsoptik 63 parallel zur Verbindungsachse 5 in Richtung des Kollimatorlinsensystems 53 ablenkt. Anstelle der Abstrahlfläche befindet sich beim Auskoppelmodul 66 eine Empfangsfläche beispielsweise ein empfindliches CCD-Array 64. Die ausgekoppelte, visuelle Information wird beispielsweise über die Auskoppeldatenschnittstelle 67 zur Verfügung gestellt.

Prinzipiell ist auch eine kombinierte Ein- und Auskoppelvorrichtung, mit je einem Einkoppel- und einem. Auskoppelelement an einem gemeinsamen Elementträger befestigt, möglich.

Sowohl die Einkoppeldatenschnittstelle 47 als auch die Auskoppeldatenschnittstelle 67 des Einkoppelmoduls 44 bzw. des Auskoppelmoduls 66 kann mit einem Funkgerät, dessen Antenne sich vorteilhaft am Helm des Benutzers befindet, verbunden sein. Damit ist dann eine drahtlose Übertragung der optischen Informationen möglich.

## Patentansprüche

1. Nachtsichtgerät, insbesondere monokulares, mit einem Restlichtverstärker und mit einem das von einem zu beobachtenden Objekt ausgehende Restlicht auf ein Eintrittsfenster (32) des Restlichtverstärkers (33) fokussierenden Objektiv (11), mit Linsensystemen, die das durch den Restlichtverstärker (33) in einem vorgegebenen Wellenlängenbereich verstärkte Restlicht auf einen auf einer Rezeptorstrahlenachse (9) gelegenen Rezeptor, wie beispielsweise ein menschliches Auge (99), projizieren, und mit reflektiven Elementen (13, 35, 75, 97), die den Strahlengang des Lichtes durch das Nachtsichtgerät falten, **dadurch gekennzeichnet, dass** ein erstes, ein zweites, ein drittes und ein viertes reflektives Element (13, 35, 75, 97) jeweils eine Spiegelfläche aufweisen, welche jeweils paarweise in einem unveränderlichen Winkel zueinander ausgerichtet sind,
- wobei das erste reflektive Element (13) das aus Richtung einer, im allgemeinen das Objektiv aufweisenden, Objektivachse (1) einfallende Licht in Richtung einer, im allgemeinen den Restlichtverstärker (33) aufweisenden, Verstärkerachse (3), das zweite reflektive Element (35) das Licht in Richtung einer, gegebenenfalls eine Vorrichtungsaufnahme (55) für eine Ein- bzw. Auskoppelvorrichtung (44, 66) aufweisenden, Verbindungsachse (5), das dritte reflektive Element (75) das Licht in Richtung einer, im allgemeinen ein Okular (77) aufweisenden, Okularachse (7) und das vierte reflektive Element (97) das Licht in Richtung der zur Objektivachse (1) im wesentlichen parallelen Rezeptorachse (9) ausrichtet,
- wobei die Spiegelflächen wenigstens eines Paars der reflektiven Elemente (35, 75) so ausgerichtet sind, dass sie eine gemeinsame Einfallsebene für das Licht aufweisen,
- wobei zwischen wenigstens einem Paar der vier reflektiven Elemente (13, 35, 75, 97) wenigstens eines der folgenden optischen Bauteile vorgesehen ist:
- das Objektiv (11);
- wenigstens ein Objektivteil eines gegebenenfalls zweiteilig ausgebildeten Objektivs;
- der Restlichtverstärker (33);
- das Okular (77);
- wenigstens ein Okularteil (77a) eines gegebenenfalls zweiteilig ausgebildeten Okulars (77a, 77b) bzw.
- wenigstens eine Vorrichtungsaufnahme (55) für eine Ein- bzw. Auskoppelvorrichtung (44, 66);
- und wobei eine auf der Rezeptorstrahlenachse (9) gelegene Spiegelfläche eines reflektiven Elementes (97) für den vorgegebenen Wellenlängenbereich des Restlichtverstärkers (33) im wesentlichen reflektiv, gegebenenfalls für andere Wellenlängenbereiche hingegen im wesentlichen durchlässig, ist.

2. Nachtsichtgerät nach Anspruch 1, **dadurch gekennzeichnet, dass** das Okular zweiteilig ausgebildet und das vierte reflektive Element (97) zwischen den zwei Okularteilen (77a, 77b) angeordnet ist.

3. Nachtsichtgerät nach Anspruch 1 oder 2, **dadurch gekennzeichnet, dass** die vier Spiegelflächen der vier reflektiven Elemente (13, 35, 75, 97), welche vorzugsweise als Planspielgel oder Reflexionsprismen ausgebildet sind, im wesentlichen gleich wie bei einem konventionellen Porro-2-Prismensystem ausgerichtet sind.

4. Nachtsichtgerät nach einem der vorhergehenden Ansprüche, **dadurch gekennzeichnet, dass** das über den Restlichtverstärker (33) dem Rezeptor (99) zugeführte Bild einen Vergrösserungsfaktor von im wesentlichen 1 hat.

5. Nachtsichtgerät nach einem der vorhergehenden Ansprüche, **dadurch gekennzeichnet, dass** die Spiegelflächen, insbesondere die des vierten reflektiven Elementes (97), asphärisch ausgebildet sind (ist).

6. Nachtsichtgerät nach einem der vorhergehenden Ansprüche, **dadurch gekennzeichnet, dass** das erste reflektive Element (13) um die Verstärkerachse (3) und das vierte reflektive Element (97) um die Okularachse (7) unter Beibehaltung der Parallelität von Objektivachse (1) und Rezeptorstrahlenachse (9) gegenüber den dazwischen angeordneten, reflektiven Elementen (35, 75) verdrehbar sind.

7. Nachtsichtgerät nach einem der vorhergehenden Ansprüche, **dadurch gekennzeichnet, dass** in einem im wesentlichen kollimierte Strahlen aufweisenden Teil des Strahlengangs (56), zwischen dem Restlichtverstärker (33) und dem Okular (77), insbesondere zwischen dem zweiten (35) und dem dritten reflektiven Element (75), eine Vorrichtungsaufnahme (55) für eine, insbesondere modulartig, einbringbare Ein- bzw. Auskoppelvorrichtung (44, 66) zum Einkoppeln von optischen Signalen und/oder zum Auskoppeln wenigstens eines Teils des verstärkten Restlichtanteils in bzw. aus diesem Strahlengang (56) vorgesehen ist.

8. Nachtsichtgerät nach Anspruch 7, **dadurch gekennzeichnet, dass** die Vorrichtungsaufnahme (55) in Form einer Aussparung (52) ausgebildet ist, wobei die im Strahlengang (56) liegenden Grenzflächen des Nachtsichtgerätes zur Aussparung (52) mit wenigstens zwei transmissiven Dichtfenstern (54) versehen sind, insbesondere in Form von planparallelen Glasplatten.

## Claims

1. Night-vision device, in particular a monocular one, comprising a low light level amplifier and comprising an objective (11) which focuses the low light level emanating from an object to be observed onto an entry window (32) of the low light level amplifier (33), comprising lens systems which project the low light level amplified by the low light level amplifier (33) in a predetermined wavelength range onto a receptor, such as, for example, a human eye (99), located on a receptor beam axis (9), and comprising reflective elements (13, 35, 75, 97) which fold the beam path of the light through the night-vision device, **characterized in that** a first, a second, a third and a fourth reflective element (13, 35, 75, 97) have in each case a mirror surface, which in each case are aligned in pairs relative to one another at an invariable angle,
- the first reflective element (13) orienting the light incident from the direction of an objective axis (1) generally having the objective into the direction of an amplifier axis (3) generally having the low light level amplifier (33), the second reflective element (35) orienting the light in the direction of a connecting axis (5) optionally having a device receptacle (55) for a coupling or uncoupling device (44, 66), the third reflective element (75) orienting the light in the direction of an eyepiece axis (7) generally having an eyepiece (77), and the fourth reflective element (97) orienting the light in the direction of the receptor axis (9) substantially parallel to the objective axis (1),
- the mirror surfaces of at least one pair of the reflective elements (35, 75) being oriented so that they have a common plane of incidence for the light,
- at least one of the following optical components being provided between at least one pair of the four reflective elements (13, 35, 75, 97):
- the objective (11);
- at least one objective part of an optionally two-part objective;
- the low light level amplifier (33);
- the eyepiece (77);
- at least one eyepiece part (77a) of an optionally two-part eyepiece (77a, 77b) or
- at least one device receptacle (55) for a coupling or uncoupling device (44, 66);
- and a mirror surface of a reflective element (97), which surface is located on the receptacle beam axis (9), being substantially reflective for the predetermined wavelength range of the low light level amplifier (33) but optionally substantially transmittive for other wavelength ranges.

2. Night-vision device according to Claim 1, **characterized in that** the eyepiece is formed in two parts and the fourth reflective element (97) is arranged between the two eyepiece parts (77a, 77b).

3. Night-vision device according to Claim 1 or 2, **characterized in that** the four mirror surfaces of the four reflective elements (13, 35, 75, 97) which are preferably in the form of plane mirrors or reflecting prisms are oriented in substantially the same way as in the case of a conventional Porro 2-prism system.

4. Night-vision device according to any of the preceding Claims, **characterized in that** the image fed to the receptor (99) via the low light level amplifier (33) has a magnification factor of substantially 1.

5. Night-vision device according to any of the preceding Claims, **characterized in that** the mirror surfaces are aspherical, in particular the mirror surface of the fourth reflective element (97) is aspherical.

6. Night-vision device according to any of the preceding Claims, **characterized in that** the first reflective element (13) is rotatable about the amplifier axis (3) and the fourth reflective element (97) is rotatable about the eyepiece axis (7) with retention of the parallelism of objective axis (1) and receptor beam axis (9) relative to the reflective elements (35, 75) arranged inbetween.

7. Night-vision device according to any of the preceding Claims, **characterized in that** a device receptacle (55) for a coupling or uncoupling device (44, 66) which can be introduced in particular in modular form and is intended for inputting optical signals and/or for outputting at least a part of the amplified low light level fraction into or out of this beam path (56) is provided in a part of the beam path (56) which has substantially collimated beams, between the low light level amplifier (33) and the eyepiece (77), in particular between the second (35) and the third reflective element (75).

8. Night-vision device according to Claim 7, **characterized in that** the device receptacle (55) is in the form of a recess (52), those interfaces of the night-vision device with the recess (52) which are located in the beam path (56) being provided with at least two transmittive sealing windows (54), in particular in the form of plane parallel glass plates.

## Revendications

1. Appareil de vision nocturne, en particulier monoculaire, avec un amplificateur de lumière résiduelle et avec un objectif (11), focalisant la lumière résiduelle partant d'un objet à observer sur une fenêtre d'entrée (32) de l'amplificateur de lumière résiduelle (33), avec des systèmes à lentille projetant la lumière résiduelle, amplifiée par l'amplificateur de lumière résiduelle (33) dans une plage de longueurs d'onde prédéterminée, sur un récepteur placé sur un axe de rayonnement de réception (9), tel que par exemple un oeil humain (99), et avec des éléments réfléchissants (13, 35, 75, 97), déviant le trajet du rayon de la lumière à travers l'appareil de vision nocturne, **caractérisé en ce qu'**un premier, un deuxième, un troisième et un quatrième éléments réfléchissants (13, 35, 75, 97) présentent chacun une surface réfléchissante, orientée chaque fois par paire sous un angle invariable l'une par rapport à l'autre,
- où le premier élément réfléchissant (13) oriente la lumière incidente d'une direction d'un axe d'objectif (1), présentant en général l'objectif, dans la direction d'un axe d'amplificateur (3), présentant en général l'amplificateur de lumière résiduelle (33), le deuxième élément réfléchissant (35) orientant la lumière dans la direction d'un axe de liaison (5) présentant, le cas échéant, un support à dispositif (55) pour un dispositif de couplage ou de désaccouplement (44, 66), le troisième élément réfléchissant (75) orientant la lumière dans la direction d'un axe oculaire (7) présentant en général un oculaire (77), et le quatrième élément réfléchissant (97) orientant la lumière dans la direction de l'axe de récepteur (9) sensiblement parallèle à l'axe d'objectif (1)
- où les surfaces réfléchissantes d'au moins une paire des éléments réfléchissants (35, 75) sont orientées de manière qu'elles présentent un plan d'incidence commun pour la lumière
- où, entre au moins une paire des quatre éléments réfléchissants (13, 35, 75, 97), est prévu au moins l'un des composants optiques suivants :
- l'objectif (11) ;
- au moins une partie d'objectif d'un objectif, réalisé le cas échéant en deux parties ;
- l'amplificateur de lumière résiduelle (33) ;
- l'oculaire (77) ;
- au moins une partie d'oculaire (77a) d'un oculaire (77a, 77b), réalisé le cas échéant en deux parties, respectivement :
- au moins un support de dispositif (55) pour un dispositif de couplage respectivement de désaccouplement (44, 66) ;
- et où une surface réfléchissante, placée sur l'axe de rayon de récepteur (9) d'un élément réfléchissant (97), est sensiblement réfléchissante pour la plage de longueurs d'onde prédéterminée de l'amplificateur de lumière résiduelle (33), le cas échéant est sensiblement transparente par contre pour d'autres plages de longueurs d'onde.

2. Appareil de vision nocturne selon la revendication 1, **caractérisé en ce que** l'oculaire est réalisé en deux parties et le quatrième élément réfléchissant (97) est disposé entre les deux parties d'oculaire (77a, 77b).

3. Appareil de vision nocturne selon la revendication 1 ou 2, **caractérisé en ce que** les quatre surfaces réfléchissantes des quatre éléments réfléchissants (13, 35, 75, 97), qui sont, de préférence, réalisés sous la forme de miroirs plans ou de prismes de réflexion, sont orientées sensiblement de façon identique à ce qu'on a dans le cas d'un système à deux prismes Porro classique.

4. Appareil de vision nocturne selon l'une des revendications précédentes, **caractérisé en ce que** l'image, amenée au récepteur (99) par l'amplificateur de lumière résiduelle (33), a un facteur de grossissement sensiblement de 1.

5. Appareil de vision nocturne selon l'une des revendications précédentes, **caractérisé en ce que** les surfaces réfléchissantes, en particulier celle du quatrième élément réfléchissant (97), sont (est) de configuration asphérique.

6. Appareil de vision nocturne selon l'une des revendications précédentes, **caractérisé en ce que** le premier élément réfléchissant (13) est susceptible de tourner autour de l'axe d'amplificateur (3) et le quatrième élément réfléchissant (97) est susceptible de tourner autour de l'axe d'oculaire (7), en conservant le parallélisme de l'axe d'objectif (1) et de l'axe de rayon de récepteur (9) par rapport aux éléments réfléchissants (35, 75) intermédiaires.

7. Appareil de vision nocturne selon l'une des revendications précédentes, **caractérisé en ce que**, dans une partie, présentant essentiellement des rayons collimatés, du trajet des rayons (56), entre l'amplificateur de lumière résiduelle (33) et l'oculaire (77), en particulier entre le deuxième (35) et le troisième élément réfléchissant (75), est prévu un support de dispositif (55) pour un dispositif de couplage, respectivement de désaccouplement (44, 66) pouvant être introduit, en particulier modulaire, servant à coupler des signaux optiques et/ou à désaccoupler au moins une partie de la fraction de lumière résiduelle amplifiée, dans, respectivement hors, du trajet des rayons (56).

8. Appareil de vision nocturne selon la revendication 7, **caractérisé en ce que** le support de dispositif (55) est réalisé sous la forme d'un évidemment (52), les faces limites, situées dans le trajet des rayons (56), de l'appareil de vision nocturne étant muni, au niveau de l'évidemment (52), d'au moins deux fenêtres d'étanchéité (54) transmissives, en particulier réalisées sous la forme de plaques de verre planes-parallèles.
